# EUROPÄISCHE PATENTSCHRIFT

(11) **EP 3 340 392 B1**
(45) Veröffentlichungstag und Bekanntmachung des Hinweises auf die Patenterteilung: **15.05.2019**
(21) Anmeldenummer: 16306804.2
(22) Anmeldetag: 23.12.2016
(51) Int. Cl.: H01R 13/58, H01R 13/52, H01R 31/02

(54) **ANORDNUNG ZUM VERBINDEN VON ELEKTRISCHEN LEITUNGEN**
ASSEMBLY FOR CONNECTION OF ELECTRICAL LINES
SYSTÈME DE BRANCHEMENT DE CONDUITES ÉLECTRIQUES

(43) Veröffentlichungstag der Anmeldung: 27.06.2018
(73) Patentinhaber: Nexans, 92400 Courbevoie (FR)
(72) Erfinder: HOFMANN, Michael, 92655 GRAFENWÖHR (DE); VOIT, Martin, 92709 MOOSBACH (DE); MAYER, Udo, 92637 Weiden (DE); HUSCHER, Rainer, 95679 WALDERSHOF (DE)
(74) Vertreter: Laget, Jean-Loup

(56) Entgegenhaltungen:
- EP-A1- 2 485 336
- EP-A1- 2 605 337
- DE-A1- 19 741 572
- DE-A1-102013 011 874
- DE-A1-102014 212 375
- GB-A- 1 280 041

## Beschreibung

Die Erfindung bezieht sich auf eine Anordnung zur elektrisch leitenden Verbindung von mindestens zwei von einer Isolierung umgebenen elektrischen Leitungen gemäß dem Patentanspruch 1.

Derartige Anordnungen kommen beispielsweise in elektrischen Verteilern oder als Kupplungselemente in elektrischen Anlagen zum Einsatz. Beispielsweise im Motorraum von Kraftfahrzeugen, insbesondere von Fahrzeugen mit elektrischem Antrieb oder mit einem Hybridantrieb, gibt es eine große Anzahl von elektrischen Leitern, die miteinander verbunden oder an Kontaktelemente angeschlossen werden müssen. Bei den elektrischen Leitern handelt es sich zumeist um isolierte Litzenleiter.

Bei bekannten Anordnungen zum Verbinden von elektrischen Leitern wird die Kontaktstelle zwischen den elektrischen Leitern oder zwischen Leitern und Kontaktelementen mit einem Spritzgußkörper umspritzt. Dieses Spritzgehäuse füllt alle Räume um die Kontaktstelle(n) herum vollständig aus und reicht bis auf den Mantel bzw. die Isolierung der Leiter. Insbesondere in Kraftfahrzeugen muss die ganze Anordnung feuchtigkeitsdicht sein. Zur feuchtigkeitsdichten Anlage des Spritzkörpers an dem Leitungsmantel muss sich das Spritzmaterial stoffschlüssig mit dem Isolierungsmaterial verbinden. Dies ist bei Isolierungen aus Silikon oder aus vernetzten Polymeren in Verbindung mit herkömmlichem Umspritzmaterial wie Polyamid oder Polyurethan sehr problematisch.

Eine Anordnung zum Kontaktieren von elektrischen Leitungen ist beispielweise in der EP 2 485 337 B1 beschrieben. Die zu verbindenden Leiterenden reichen in das Spritzgehäuse hinein, sodaß die Isolierung der Leitung bei der Herstellung der Anordnung mit umspritzt wird. An dem Ende, an dem die Leitung in das Spritzgehäuse eintritt, hat das Spritzgehäuse ein an dem Leitungsmantel rundum dicht anliegendes Dichtelement, was von einer Kapsel umgeben ist, die das Dichtelement gegen die Leitung drückt. Das Dichtelement ist von dem Spritzkörper vollständig umgeben.

Die DE 10 2013 011 874 A1 beschreibt einen elektrischen Leitungsverteiler, in dem beispielsweise drei elektrische Leitungen miteinander verbunden sind. Um die Verbindungsstelle der Leitungen ist ein Verteilergehäuse herum angeordnet, das aus einem leitfähigen Innengehäuse und einem isolierenden Außengehäuse besteht. Das Verteilergehäuse weist Gehäusedurchführungen auf, durch welche die in den Anschlußraum des Leitungsverteilers hineinragenden Leitungen hindurchgeführt sind. In den Gehäusedurchführungen sind jeweils eine Dichtungshülse und ein Dichtelement angeordnet. Das als Dichtung ausgebildete Dichtelement ist an seiner Innenseite und seiner Außenseite wellenartig ausgebildet. Es wird zwischen Teilen der jeweiligen Gehäusedurchführung eingeklemmt.

Der Erfindung liegt die Aufgabe zugrunde, die oben geschilderte Anordnung so zu gestalten, dass sie unabhängig vom Material der Mäntel der Leitungen feuchtigkeitsdicht herzustellen ist und einen kompakten Isolierkörper aufweist.

Diese Aufgabe wird entsprechend der Gesamtheit der Merkmale des Patentanspruchs 1 gelöst.

Bei der der erfindungsgemäßen Anordnung sind die Durchgänge der Leitungen in den Isolierkörper mittels der Verschlußelemente mediendicht verschlossen. Dabei wird eine dichte Verbindung zwischen den Leitungsoberflächen und dem Spritzkörper hergestellt. Es ist nicht notwendig, daß sich das Spritzmaterial stoffschlüssig mit den Leitungsisolierungen verbindet. Deshalb kann die erfindungsgemäße Anordnung sowie deren Herstellungsverfahren mit Vorteil für Leitungen eingesetzt werden, welche einen Mantel aus Silikon oder vernetzten Polymeren haben, mit welchen das Spritzmaterial keine stoffschlüssige Verbindung eingeht. Ebenso kann der Herstellungsprozeß von Anordnungen mit umspritzbaren Leitungsisolierungen einfach auf solche mit nicht umspritzbaren Leitungsisolierungen umgestellt werden, wobei die Geometrie des Spritzkörpers weitgehend beibehalten werden kann. Bei nicht dicht umspritzbaren Leitungsisolierungen kommen lediglich die Verschlußelemente zusätzlich zum Einsatz.

Bei der erfindungsgemäßen Anordnung sind die auf den die auf den Isolierungen der Leitungen aufgebrachten Dichtelemente außerhalb des gespritzten Isolierkörpers angeordnet. Dadurch, dass die Dichtelemente nicht mit umspritzt werden müssen, ist der Isolierkörper sehr kompakt und platzsparend ausgeführt. Dies ist insbesondere im Motorraum von Kraftfahrzeugen vorteilhaft. Weiterhin hält ein kompakter Isolierkörper erhöhten mechanischen Anforderungen, beispielsweise Schwingungsanforderungen, gut stand.

Ausführungsbeispiele des Erfindungsgegenstandes sind in den Zeichnungen dargestellt.

Es zeigen:
Fig. 1 einen Schnitt durch eine erfindungsgemäße Anordnung nach einem ersten Ausführungsbeispiel.
Fig. 2 einen Schnitt durch eine erfindungsgemäße Anordnung nach einem zweiten Ausführungsbeispiel.

In den Zeichnungen beziehen sich gleiche Bezugszeichen auf gleiche technische Merkmale.

Die erfindungsgemäße Anordnung wird im folgenden als Verteiler mit drei elektrischen Leitungen beschrieben, in dem eine ankommende Leitung mit zwei abgehenden Leitungen verbunden ist, wie er beispielsweise im Motorraum eines Kraftfahrzeugs eingesetzt werden kann. Es können selbstverständlich auch mehr als zwei abgehende Leitungen mit mehr als einer ankommenden Leitung verbunden sein.

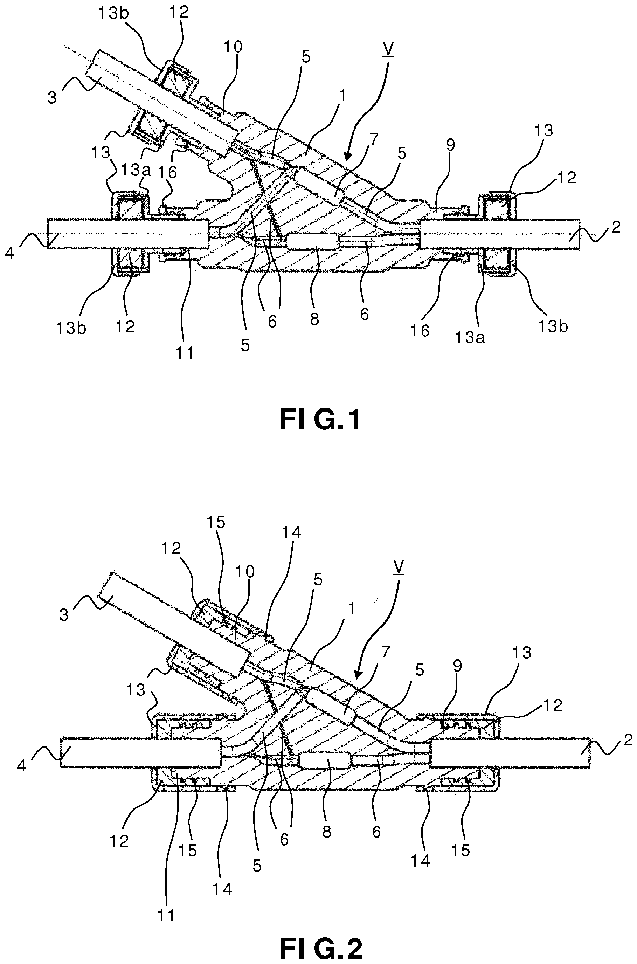

In Fig. 1 ist die erfindungsgemäße Anordnung nach einem ersten Ausführungsbeispiel in einem Längsschnitt gezeigt. In ein aus Isoliermaterial bestehendes Gehäuse 1 sind drei elektrische Leitungen 2, 3, 4 hineingeführt. Die elektrischen Leitungen 2, 3, 4 haben einen Mantel aus Isoliermaterial, beispielsweise aus Silikon. Das Gehäuse 1 ist ein Isolierkörper 1, welcher beispielsweise aus Polyamid (PA) oder Polyurethan (PUR) besteht. Die Leitung 2 ist beispielsweise an eine in einem Kraftfahrzeug angeordnete Spannungsquelle bzw. an eine mit derselben verbundene Steuerelektronik angeschlossen, und die Leitungen 3 und 4 können zu Verbrauchern bzw. elektrischen Geräten führen, die sich in dem Kraftfahrzeug befinden. Die Leiter der Leitungen 2, 3, 4 sind an einer Verbindungsstelle V miteinander verbunden. Die Verbindungsstelle V wird von dem Isolierkörper 1 vollständig umschlossen. Die Leitungen 2, 3, 4 haben jeweils zwei aus isolierten elektrischen Leitern bestehende Adern 5, 6. Die Leiter der Adern 5, 6 sind an der Verbindungsstelle V durch elektrische Verbinder 7, 8 elektrisch leitend miteinander verbunden.

Der Isolierkörper 1 hat drei nach außen weisende, rohrartige Vorsprünge 9, 10, 11 oder Stutzen, durch welche die Leitungen 2, 3, 4 in denselben eingeführt sind. Die Vorsprünge 9, 10, 11 haben dafür Durchlässe, durch welche die Leitungen 2, 3, 4 hindurchgeführt sind.

Die Anordnung umfaßt weiterhin für jede der Leitungen 2, 3, 4 ein ringförmiges Dichtelement 12, welches dicht am Mantel der jeweiligen Leitung 2, 3, 4 anliegt. Die Dichtelemente 12 können beispielsweise aus Silikon oder aus Ethylen-Propylen-Dien-Kautschuk (EPDM) bestehen. Diese Materialien sind geeignet, auf den Leitungsmänteln aus Silikon oder auf Leitungen mit vernetzter Isolierung fest und mediendicht anzuliegen. Die Dichtelemente 12 sind außerhalb des Isolierkörpers 1 angeordnet. Auf jedem der Dichtelemente 12 ist ein Schutzelement 13 festgelegt, welches das jeweilige Dichtelement 12 vollständig umschließt. Die Schutzelemente bestehen beispielsweise aus PA oder PUR. Die Schutzelemente 13 weisen jeweils zwei Teile 13a, 13b auf. Der erste Teil 13a hat einen rohrartigen Ansatz oder Stutzen, welcher an der Isolierung der jeweiligen Leitung 2, 3, 4 anliegt und von dem jeweiligen Vorsprung 9, 10, 11 des Isolierkörpers 1 stoffschlüssig und mediendicht umschlossen ist. Innerhalb des ersten Teils 13a des Schutzelements 13 ist der Dichtring 12 angeordnet. Der zweite Teil 13b ist im gezeigten Beispiel als Kappe ausgeführt. Er ist an dem ersten Teil 13a rundum festgelegt, sodaß das Dichtelement 12 von den beiden Teilen 13a, 13b des Schutzelements 13 rundum dicht umgeben ist. Die beiden Teile 13a, 13b sind kraftschlüssig miteinander verbunden, beispielsweise verrastet oder verpreßt. Die Dichtelemente 12 sind so jeweils mediendicht, mittels der Schutzelemente 13, mit den Vorsprüngen 9, 10, 11 des Isolierkörpers 1 verbunden. Die Einheit aus Dichtelement 12 und Schutzelement 13 kann als Verschlußelement betrachtet werden, mit welchem jeweils ein Durchgang einer Leitung 2, 3, 4 in den Isolierkörper 1 verschlossen und abgedichtet wird.

Wie in Fig. 1 mit dem Bezugszeichen 16 angedeutet, können die Vorsprünge 9, 10, 11 des Isolierkörpers 1 Innenrillen und die Ansätze der Verschlußelemente Außenrillen aufweisen, welche jeweils miteinander in Eingriff stehen. Dadurch wird jeweils die stoffschlüssige und mediendichte Verbindung zwischen den beiden Stutzen erhöht.

In Fig. 2 ist die erfindungsgemäße Anordnung nach einem zweiten Ausführungsbeispiel in einem Längsschnitt gezeigt. Der Isolierkörper 1 hat ebenfalls drei nach außen weisende, rohrartige Vorsprünge 9, 10, 11, durch welche die Leitungen 2, 3, 4 in den Isolierkörper eingeführt sind. Die Verschlußelemente bestehen in diesem Beispiel ebenfalls jeweils aus einem Dichtelement 12 und einem Schutzelement 13. Die Dichtelemente 12 und die diese umgebenden Schutzelemente 13 weisen jeweils eine kappenartige Form auf, welche zum Isolierkörper 1 hin geöffnet ist. Die Dichtelemente 12 sind jeweils auf die Vorsprünge 9, 10, 11 des Isolierkörpers 1 aufgebracht, sodaß die Dichtelemente 12 gleichzeitig an den Vorsprüngen 9, 10, 11 als auch an den Isolierungen der Leitungen 2, 3, 4 kraftschlüssig und mediendicht anliegen. Die Dichtelemente 12 können beispielsweise aus Silikon oder aus EPDM bestehen. Die Schutzelemente 13 sind auf den Dichtelementen 12 angebracht und umgeben sowohl die Dichtelemente 12 als auch den an die Vorsprünge 9, 10, 11 angrenzenden Bereich des Isolierkörpers 1. Die Schutzelemente 13 sichern die Dichtelemente 12 zusätzlich, sodaß diese in montiertem Zustand nicht auf den Leitungen 2, 3, 4 in unerwünschter Weise verschoben werden. Die Schutzelemente 13 können beispielsweise an dem Isolierkörper 1 mittels eines Rastmechanismus 14 festgelegt werden. Die Verschlußelemente, jeweils bestehend aus den Dichtelementen 12 und den Schutzelementen 13, bilden Kappen, mit denen jeweils ein Durchgang einer Leitung 2, 3, 4 in den Isolierkörper 1 verschlossen und mediendicht abgedichtet wird, wobei die Kappen sowohl auf der Leitungsisolierung als auch auf den Vorsprüngen 9, 10, 11 des Isolierkörpers 1 anliegen.

Wie in Fig. 2 dargestellt, können die Vorsprünge 9, 10, 11 Außenrillen 15 aufweisen, welche in das elastische Material der Dichtelemente 12 eingreifen und so für einen sicheren Sitz derselben sorgen.

Die Anordnung nach der Erfindung, wie sie in Fig. 1 dargestellt ist, wird beispielsweise wie folgt montiert.

Auf die drei zu verbindenden Leitungen 2, 3, 4 werden jeweils die zweiten Teile 13b der Schutzelemente 13 sowie die Dichtelemente 12 aufgeschoben. Anschließend werden jeweils die ersten Teile 13a der Schutzelemente 13 auf die Leitungen 2, 3, 4 aufgeschoben und in ihre endgültige Position gebracht.

Danach wird die Verbindungsstelle V hergestellt. Um die Verbindungsstelle V herum wird dann der Isolierkörper 1 durch Spritzgießen herumgeformt. Dabei werden die Vorsprünge 9, 10, 11 des Isolierkörpers 1 um die Ansätze der Schutzelemente 13 herumgeformt.

Nachfolgend werden die Dichtelemente 12 so auf der Leitung verschoben, daß sie von den ersten Teilen 13a umschlossen werden. Anschließend werden jeweils die ersten Teile 13a der Schutzelemente 13 mit den zweiten Teilen 13b verschlossen.

Nach einem alternativen Verfahren kann die erfindungsgemäße Anordnung, wie sie in Fig. 2 dargestellt ist, folgendermaßen hergestellt werden.

Zunächst werden auf die drei zu verbindenden Leitungen 2, 3, 4 jeweils die Schutzelemente 13 und die Dichtelemente 12 aufgeschoben. Die Elemente 12, 13 werden von der herzustellenden Verbindungsstelle V aus gesehen etwas weiter als zu ihrer endgültigen Position auf die Leitungen aufgeschoben. Anschließend wird die Verbindungsstelle V hergestellt. Um die Verbindungsstelle V herum wird dann der Isolierkörper 1 durch Spritzgießen geformt. Dabei werden die Vorsprünge 9, 10, 11 so hergestellt, daß sie sich jeweils bis über die Mäntel der Leitungen 2, 3, 4 erstrecken und an diesen dicht anliegen. Nun werden zunächst die Dichtelemente 12 und anschließend die Schutzelemente an ihre endgültige Position verschoben. Dies wird so vorgenommen, daß die Dichtelemente 12 jeweils dicht auf den Vorsprüngen 9, 10, 11 anliegen und die Schutzelemente 13 die Dichtelemente 12 fest umschließen und kraft- oder formschlüssig auf dem Isolierkörper 1 festgelegt sind. In dem Beispiel aus Fig. 2 werden die Schutzelemente 13 mittels eines Rastmechanismus 14 an den Enden des Isolierkörpers 1 festgelegt.

Durch das Spritzgießen wird die Verbindungsstelle V rundum dicht mit Isoliermaterial umgeben. Dadurch werden eine zusätzliche Abdichtung gegenüber Feuchtigkeit sowie eine hohe Widerstandsfähigkeit der Anordnung gegenüber Stoß- und Schwingungsbelastungen der Anordnung erreicht.

Die geschilderten Verfahrensweisen gelten mit Vorteil dann, wenn an den fernen Enden der Leitungen 2, 3, 4 bereits Kontaktelemente oder andere Teile angebracht sind. Wenn diese Enden der Leitungen 2, 3, 4 noch frei sind, können die Dichtelemente 12 und die zweiten Teile 13b der Schutzelemente 13 (für das erste geschilderte Verfahren) bzw. die Dichtelemente 12 und die Schutzelemente 13 (für das zweite geschilderte Verfahren) auch nach Fertigstellung der Verbindungsstelle V aufgeschoben werden. Die Handhabung aller Teile bleibt ansonsten unverändert.

## Patentansprüche

1. Anordnung zur elektrisch leitenden Verbindung von mindestens zwei von einer Isolierung umgebenen elektrischen Leitungen (2,3,4), bei welcher die Verbindungsstellen zwischen den Leitern der Leitungen (2,3,4) von einem Isolierkörper (1) umschlossen sind, bei welcher auf die elektrisch leitend miteinander zu verbindenden Leitungen (2,3,4) jeweils ein Verschlußelement (12,13) aufgeschoben ist, welches ein Dichtelement (12) und ein dieses fest umgebendes Schutzelement (13) aufweist, das rundum mediendicht an der Isolierung der Leitung (2,3,4) anliegt, **dadurch gekennzeichnet, dass** der Isolierkörper (1) durch Spritzgießen hergestellt ist und an den die Leitungen (2,3,4) umgebenden Bereichen jeweils einen rohrartigen Vorsprung (9,10,11) aufweist und bei welcher in montiertem Zustand auf jeder Leitung (2,3,4) das Dichtelement (12) außerhalb des Isolierkörpers (1) angeordnet und mittels des Schutzelements (13) mediendicht mit einem der Vorsprünge (9,10,11) des Isolierkörpers (1) verbunden ist.

2. Anordnung nach Anspruch 1, **dadurch gekennzeichnet,**
- **dass** die Schutzelemente (13) jeweils aus zwei Teilen (13a,13b) bestehen, von denen ein erster Teil (13a) einen rohrartigen, fest an der Isolierung der Leitungen (2,3,4) anliegenden Ansatz aufweist, welcher jeweils von einem Vorsprung (9,10,11) des Isolierkörpers (1) stoffschlüssig umschlossen ist, und von denen ein zweiter Teil (13b) eine kappenartige Form hat, und
- **dass** der erste und der zweite Teil (13a,13b) des Schutzelements (13) in montiertem Zustand kraftschlüssig aneinander festgelegt sind und das Dichtelement (12) dicht umschließen.

3. Anordnung nach Anspruch 2, **dadurch gekennzeichnet, dass** die Vorsprünge (9,10,11) des Isolierkörpers (1) Innenrillen und die Ansätze der Verschlußelemente (12,13) Außenrillen aufweisen, welche jeweils miteinander in Eingriff stehen.

4. Anordnung nach Anspruch 1, **dadurch gekennzeichnet,**
- **dass** die Dichtelemente (12) und die diese umgebenden Schutzelemente (13) jeweils eine zum Isolierkörper hin offene, kappenartige Form aufweisen und
- **dass** die Dichtelemente (12) zusammen mit den dieselben umgebenden Schutzelementen (13) jeweils auf die Vorsprünge (9,10,11) des Isolierkörpers (1) mediendicht aufgebracht sind.

5. Anordnung nach Anspruch 4, **dadurch gekennzeichnet, dass** die Vorsprünge (9,10,11) des Isolierkörpers (1) Außenrillen (15) aufweisen, welche jeweils mit dem Dichtelement (12) der Verschlußelemente (12,13) in Eingriff stehen.

## Claims

1. An arrangement for the electrically conductive connection of at least two electrical lines (2, 3, 4) surrounded by an insulation, in which the connecting points between the conductors of the lines (2, 3, 4) are enclosed by an insulating body (1), in which in each case a closure element (12, 13) is pushed onto the lines (2, 3, 4) to be electrically conductively connected with each other, which closure element has a sealing element (12) and a protective element (13) firmly surrounding the latter, which abuts all-around in a media-tight manner against the insulation of the line (2, 3, 4),
**characterized in that**
the insulating body (1) is produced by injection molding and at the areas surrounding the lines (2, 3, 4) in each case has a tubular projection (9, 10, 11) and in which in the mounted state on each line (2, 3, 4) the sealing element (12) is arranged outside of the insulating body (1) and is connected by means of the protective element (13) in a media-tight manner to one of the projections (9, 10, 11) of the insulating body (1).

2. An arrangement according to Claim 1, **characterized in**
- **that** the protective element (13) in each case consists of two parts (13a, 13b), of which a first part (13a) has a tubular extension abutting firmly against the insulation of the lines (2, 3, 4), which in each case is materially enclosed by a projection (9, 10, 11) of the insulating body (1), and of which a second part (13b) has a cap-like form, and
- **that** the first and the second part (13a, 13b) of the protective element (13) in the mounted state are non-positively secured to each other and tightly surround the sealing element (12).

3. An arrangement according to Claim 2, **characterized in that** the projections (9, 10, 11) of the insulating body (1) have inner grooves and the extensions of the closure elements (12, 13) have outer grooves, which in each case engage with one another.

4. An arrangement according to Claim 1, **characterized in**
- **that** the sealing elements (12) and the protective elements (13) surrounding the latter in each case have a cap-like form open towards the insulating body and
- **that** the sealing elements (12) together with the protective elements (13) surrounding the same in each case are applied in a media-tight manner to the projections (9, 10, 11) of the insulating body (1).

5. An arrangement according to Claim 4, **characterized in that** the projections (9, 10, 11) of the insulating body (1) have outer grooves (15), which in each case are engaged with the sealing element (12) of the closure elements (12, 13).

## Revendications

1. Disposition pour la liaison électro-conductrice d'au moins deux câbles électriques (2, 3, 4) entourés d'une isolation, dans laquelle les points de liaison entre les conducteurs des câbles (2, 3, 4) sont entourés d'un corps isolant (1), dans laquelle, sur chacun des câbles (2, 3, 4) à relier électriquement entre eux est emmanché un élément de fermeture (12, 13), qui comprend un élément d'étanchéité (12) et un élément de protection (13) entourant celui-ci de manière fixe, qui s'appuie de manière étanche aux fluides autour de l'isolation du câble (2, 3, 4), **caractérisé en ce que** le corps isolant (1) est fabriqué par moulage par injection et comprend, au niveau de chacune des zones entourant les câbles (2, 3, 4), une saillie tubulaire (9, 10, 11) et dans laquelle, dans l'état monté, l'élément d'étanchéité (12) est disposé sur chaque câble (2, 3, 4) à l'extérieur du corps isolant (1) et est relié de manière étanche aux fluides avec une des saillies (9, 10, 11) du corps isolant (1) au moyen de l'élément de protection (13).

2. Disposition selon la revendication 1, **caractérisée en ce que**
- les éléments de protection (13) sont constitués chacun de deux parties (13a, 13b) dont une première partie (13a) comprend un embout tubulaire s'appuyant fermement contre l'isolation des câbles (2, 3, 4), qui est entourée, avec liaison de matière, par une saillie (9, 10, 11) du corps isolant (1) et dont une deuxième partie (13b) présente la forme d'un capuchon et
- les première et deuxième parties (13a, 13b) de l'élément de protection (13) étant, dans l'état monté, fixés entre eux par force et entourant de manière étanche l'élément d'étanchéité (12).

3. Disposition selon la revendication 2, **caractérisée en ce que** les saillies (9, 10, 11) du corps isolant (1) comprennent des rainures internes et les embouts des éléments de fermeture (12, 13) comprennent des rainures externes, s'emboîtent entre elles.

4. Disposition selon la revendication 1, **caractérisée en ce que**
- les éléments d'étanchéité (12) et les éléments de protection (13) entourant ceux-ci présentent chacun une forme de capuchon ouvert en direction du corps isolant et
- les éléments d'étanchéité (12) sont montés, conjointement avec les éléments de protection (13) entourant ceux-ci, sur les saillies (9, 10, 11) du corps isolant (1) de manière étanche aux fluides.

5. Disposition selon la revendication 4, **caractérisée en ce que** les saillies (9, 10, 11) du corps isolant (1) comprennent des rainures externes (15) qui s'emboîtent chacune avec l'élément d'étanchéité (12) des éléments de fermeture (12, 13).
